(19)

Europäisches
Patentamt
European
Patent Office
Office européen
des brevets

(11) **EP 4 148 601 A1**

(12) **EUROPEAN PATENT APPLICATION**
published in accordance with Art. 153(4) EPC

(43) Date of publication:
**15.03.2023 Bulletin 2023/11**

(21) Application number: **20934494.4**

(22) Date of filing: **08.05.2020**

(51) International Patent Classification (IPC):
**G06F 21/32** [(2013.01)]

(52) Cooperative Patent Classification (CPC):
**G06F 21/32**

(86) International application number:
**PCT/JP2020/018749**

(87) International publication number:
**WO 2021/225002 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **ABE, Narishige**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **BIOMETRIC AUTHENTICATION DEVICE, BIOMETRIC AUTHENTICATION METHOD, AND
BIOMETRIC AUTHENTICATION PROGRAM**

(57)    A biometric authentication device includes: a calculation unit that calculates distribution regarding a first similarity between biometric information of a first modality extracted from output of a sensor and the biometric information of the first modality included in registration data; a derivation unit that derives the distribution regarding a second similarity between the biometric information of the first modality of which the first similarity is ranked first and the biometric information of the first modality of which the first similarity is ranked second and lower, among the biometric information of the first modality included in the registration data; and a switching unit that switches a rate for narrowing down registrants included in the registration data to collation target persons to be collated by personal authentication that uses a second modality different from the first modality, based on the distribution regarding the first similarity and the distribution regarding the second similarity.

FIG. 2

EP 4 148 601 A1

**Description**

TECHNICAL FIELD

The present invention relates to a biometric authentication technique.

BACKGROUND ART

As one of the authentication schemes, 1:N authentication that specifies a specific individual from among a large number of people, using one type of biometric information is known. While the 1:N authentication does not involve identification (ID) key input or card presentation, with a single biometric information modality alone, the accuracy of the 1:N authentication is limited. Against such a background, a multi-biometric authentication technique that uses a plurality of types of biometric information in combination has been proposed.

SUMMARY

TECHNICAL PROBLEM

However, in the above-mentioned multi-biometric authentication technique, the narrowing-down rate for narrowing down a number N of registrants to collation target persons to be collated at the time of personal authentication is fixed. For this reason, the above-mentioned multi-biometric authentication technique has a property that makes it difficult to narrow down to the collation target persons to be collated at the time of personal authentication beyond the narrowing-down rate and speed up the collation process.

In one aspect, an object of the present invention is to provide a biometric authentication device, a biometric authentication method, and a biometric authentication program capable of speeding up a collation process at the time of personal authentication.

SOLUTION TO PROBLEM

A biometric authentication device according to one form includes: a calculation unit that calculates distribution regarding a first similarity between biometric information of a first modality extracted from output of a sensor and the biometric information of the first modality included in registration data that is predetermined; a derivation unit that derives the distribution regarding a second similarity between the biometric information of the first modality of which the first similarity is ranked first and the biometric information of the first modality of which the first similarity is ranked second and lower, among the biometric information of the first modality included in the registration data; and a switching unit that switches a narrowing-down rate configured to narrow down registrants included in the registration data to collation target persons to be collated by personal authentication that uses a second modality different from the first modality, based on the distribution regarding the first similarity and the distribution regarding the second similarity.

ADVANTAGEOUS EFFECTS OF INVENTION

The collation process at the time of personal authentication may be speeded up.

BRIEF DESCRIPTION OF DRAWINGS

FIG. 1 is a diagram illustrating an example of a multi-biometric authentication service according to a first embodiment;
FIG. 2 is a diagram illustrating an example of distribution regarding a first similarity and a second similarity;
FIG. 3 is a block diagram illustrating an example of the functional configurations of a server device and a terminal according to the first embodiment;
FIG. 4 is a diagram illustrating an example of the distribution regarding the first similarity;
FIG. 5 is a diagram illustrating an example of the distribution regarding the first similarity;
FIG. 6 is a flowchart illustrating a procedure of a registration process according to the first embodiment;
FIG. 7 is a flowchart illustrating a procedure of a multi-biometric authentication process according to the first embodiment; and
FIG. 8 is a diagram illustrating a hardware configuration example of a computer.

DESCRIPTION OF EMBODIMENTS

Hereinafter, a biometric authentication device, a biometric authentication method, and a biometric authentication program according to the present application will be described with reference to the accompanying drawings. Note that these embodiments do not limit the disclosed technique. Then, each of the embodiments may be appropriately combined within a range without causing contradiction between processing contents.

[First Embodiment]

[Example of Multi-biometric Authentication Service]

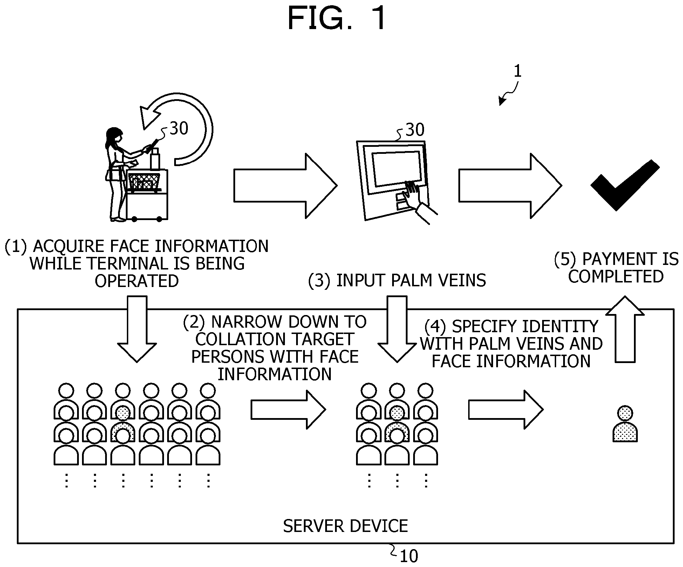

FIG. 1 is a diagram illustrating an example of a multi-biometric authentication service according to a first embodiment. Merely as one aspect, a multi-biometric authentication service 1 illustrated in FIG. 1 authenticates the identity using a plurality of types of biometric information, from an aspect of coping with a use case in which the number N of registrants of biometric information can be expanded to a scale of several millions or several tens of millions.

The multi-biometric authentication service 1 uses palm veins and face information as an example of the plurality of types of biometric information, from an aspect of not involving ID key input or card presentation and thereby achieving non-contact authentication. For example, the face information is used as a first modality that narrows down the number N of registrants to collation target persons to be collated in personal authentication, whereas the palm veins are used as a second modality that authenticates the identity from among the collation target persons narrowed down by the first modality. The "modality" mentioned here may correspond to terms such as a type of biometric information or a biometric identification site.

As an example of a use case of such a multi-biometric authentication service 1, empty-handed payment at a no-cash register store, an unmanned cash register, a self-checkout, or the like can be mentioned. As illustrated in FIG. 1, a server device 10 and a terminal 30 are used merely as an example to carry out the multi-biometric authentication service 1. These server device 10 and terminal 30 may be connected to each other via an optional network.

The server device 10 is an example of a computer that provides the multi-biometric authentication service 1 described above. The server device 10 corresponds to an example of a biometric authentication device. As an embodiment, the server device 10 can be implemented by installing a biometric authentication program that achieves the multi-biometric authentication service 1 described above into an optional computer as package software or online software. For example, the server device 10 may be implemented as a server that provides functions relating to the multi-biometric authentication service 1 described above on-premise, such as a web server. Not limited to this, the server device 10 may provide the multi-biometric authentication service 1 described above as a cloud service by implementing the multi-biometric authentication service 1 as a software as a service (SaaS) application.

The terminal 30 is used for payment in a store. Merely as an example, the terminal 30 may be connected to not only a reading device that reads product information such as a name, price, or the like of a product from a tag, a barcode, or the like allocated to the product, but also a display device or the like that displays a list of products to be purchased by a user of the store or the like, a total price, a checkout button, and the like.

By providing the above-mentioned multi-biometric authentication service 1 through these server device 10 and terminal 30, the empty-handed payment is achieved. As illustrated in FIG. 1, when product scanning and various operations on the checkout button or the like are being executed on the terminal 30, the face information such as face features as an example is acquired from a face image taken by a camera or the like built in or coupled to the terminal 30 (1). By collating the face information acquired in this manner with the face information on the number N of registrants registered in advance as users of the empty-handed payment, the number N of registrants are narrowed down to the collation target persons to be collated at the time of personal authentication (2).

After that, when the products to be purchased are paid, the input of the palm veins is received via a sensor connected to the terminal 30, for example, when the checkout button is operated to be pressed (3). In this manner, by collating the palm veins input via the sensor with the palm veins associated with the collation target persons narrowed down by the face information in (2) above, the identity of the user of the empty-handed payment is specified (4). After that, a payment process for the products to be purchased is performed using payment information such as a credit card, a debit card, or electronic money as an example associated with the user whose identity has been specified in (4) above (5).

By the series of processes (1) above to (5) above, the payment process may be executed simply by holding the palm over the sensor built in or attached to the terminal 30, such that ID-less empty-handed payment may be achieved.

[One Aspect of Problem]

In the existing multi-biometric authentication techniques except the multi-biometric authentication service 1 illustrated in FIG. 1, the narrowing-down rate for narrowing down the number N of registrants to the collation target persons to be collated at the time of personal authentication is fixed. For this reason, the existing multi-biometric authentication techniques have a property that makes it difficult to narrow down to the collation target persons to be collated at the time of personal authentication beyond the narrowing-down rate and speed up the collation process.

[One Aspect of Problem-Solving Approach]

Thus, in the multi-biometric authentication service 1 according to the present embodiment, based on distribution of similarity between input face information and registered face information, and distribution of similarity between the registered face information having first-ranked similarity and the registered face information having second and lower-ranked similarity, the narrowing-down rate for the collation target persons to be collated by personal authentication using the palm veins is switched.

The "registered face information" mentioned here refers to the face information on the number N of registrants for which a predetermined registration process such as user registration has been performed, whereas the "input face information" refers to the face information that is input when the collation target persons are narrowed down.

For example, assuming that the input face information is really acquired from the registrant, under an ideal environment, the similarity of the registered face information really of the registrant is observed as the first rank, and at the same time the similarity of the second rank and lower is observed significantly low compared with the first-ranked similarity.

However, the difference between the first-ranked similarity and the second and lower-ranked similarity is not sometimes largely widened due to the influence of the following two points. Merely as an example, variations in biometric information input states between the time of registration and the time of narrowing down can be mentioned. For example, when the first modality is the face information, variations in input states may appear, such as an orientation of the face or facial expression imaged at the time of narrowing down different from that at the time of registration, or sunglasses or a mask worn on the face, which was not worn by the user at the time of registration. As another example, the degree of uniqueness of biometric information can be mentioned. For example, when the first modality is the face information, a difference may appear in to what extent of uniqueness the face information really of a certain registrant has as compared with the face information on other registrants, depending on individual registrants.

Merely as one aspect, a situation where variations in biometric information input states between the time of registration and the time of narrowing down, and the degree of uniqueness of biometric information have a small influence on narrowing down using the first modality can be identified as close to the above-mentioned ideal environment. In this case, even if the number N of registrants is narrowed down to a small number of collation target persons, it can be estimated that the risk of accepting others with the second modality is low. Accordingly, by lowering the narrowing-down rate for narrowing down the number N of registrants to the collation target persons, the number of collation target persons narrowed down from the number N of registrants is changed to a smaller number than before the change, whereby speeding-up of collation process is achieved.

As a further aspect, in the multi-biometric authentication service 1 according to the present embodiment, it may also be possible to switch between whether or not to reacquire the input face information, based on the above two kinds of distribution. For example, it can be estimated that the risk of accepting others with the second modality is high in a situation where variations in biometric information input states between the time of registration and the time of narrowing down have a large influence. Accordingly, by executing the reacquisition of face information, a decrease in accuracy of the multi-biometric authentication may be suppressed.

In this manner, from an aspect of identifying the amount of influence of the biometric information input states at the time of registration and at the time of narrowing down, and the personal characteristics of biometric information on narrowing down using the first modality, the multi-biometric authentication service 1 according to the present embodiment uses the above two kinds of distribution.

For example, distribution D1 regarding a first similarity between the input face information and the registered face information may include the first modality input state and the personal characteristics of the input face information. Furthermore, distribution D2 regarding a second similarity between the first-ranked registered face information and the second and lower-ranked registered face information may include the personal characteristics of the first-ranked registered face information. Based on these kinds of distribution D1 and D2, the narrowing-down rate and the reacquisition of face information are switched.

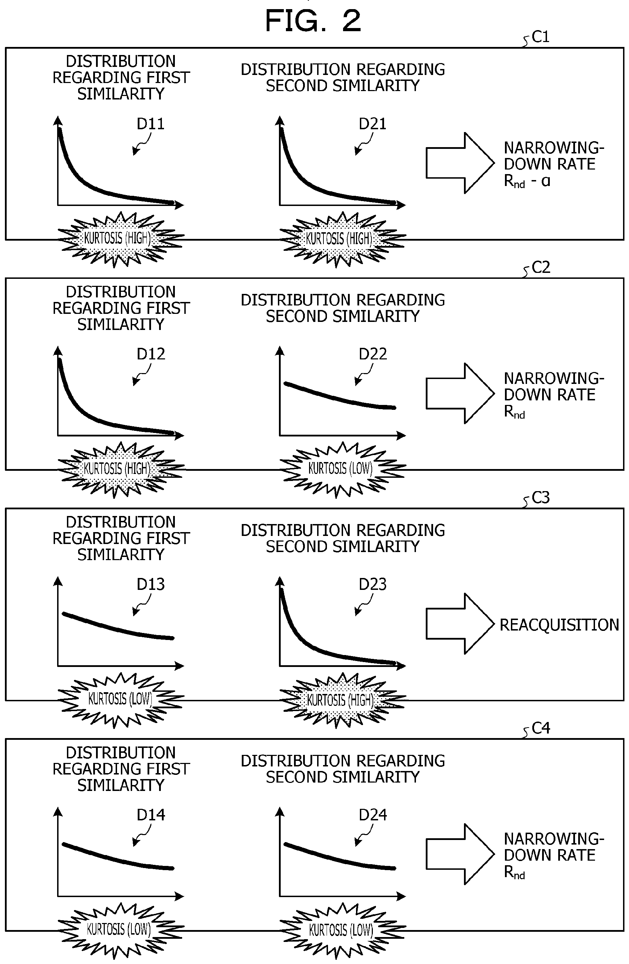

FIG. 2 is a diagram illustrating an example of the distribution regarding the first similarity and the second similarity. FIG. 2 explains the distribution D1 regarding the first similarity between the input face information and the registered face information, and the distribution D2 regarding the second similarity between the registered face information having the first-ranked first similarity and the registered face information having the second and lower-ranked first similarity, by cases, namely, four cases C1 to C4. Furthermore, FIG. 2 illustrates probability distribution obtained by sorting the first similarity or the second similarity in descending order, as an example of the distribution D1 and the distribution D2 in the cases C1 to C4. Moreover, in FIG. 2, in the probability distribution of each of the distribution D1 and the distribution D2 in the cases C1 to C4, the vertical axis is represented by the first similarity or the second similarity, whereas the horizontal axis is represented by the ranks.

For example, as to the example of the case C1 illustrated in FIG. 2, the kurtosis of distribution D11 regarding the first similarity is high, and the kurtosis of distribution D21 regarding the second similarity is also high. In the case of such a case C1, since the kurtosis of the distribution D21 is high, it can be estimated that the face information on the registrant corresponding to the input face information has higher uniqueness than the face information on other registrants. Furthermore, since there is no difference in kurtosis between the distribution D11 and the distribution D21, it can be estimated that there is no difference in the biometric information input states between the time of registration and the time of narrowing down. In this manner, in the case C1 where there is room to narrow down the number N of registrants to a small number of collation target persons, the narrowing-down rate for the collation target persons is set to "$R_{nd}-\alpha$". Therefore, the collation process at the time of personal authentication may be speeded up.

As to the example of the case C3 illustrated in FIG. 2, the kurtosis of distribution D13 regarding the first similarity is low, while the kurtosis of distribution D23 regarding the second similarity is high. In the case of such a case C3, since the kurtosis of the distribution D23 is high, it can be estimated that the face information on the registrant corresponding to the input face information has higher uniqueness than the face information on other registrants. Nevertheless, since the kurtosis of the distribution D13 is lower than that of the distribution D23, it can be estimated that there is a difference in biometric information input states between the time of registration and the time of narrowing down. In this case, the face information is reacquired. Therefore, a decrease in accuracy of the multi-biometric authentication may be suppressed.

Note that, in the cases C2 and C4 other than the cases C1 and C3 illustrated in FIG. 2, the kurtosis in distribution D22 or distribution D24 regarding the second similarity is high. In the case of these cases C2 and C4, it can be estimated that the face information on the registrant corresponding to the input face information has lower uniqueness than the face information on other registrants. In this case, the narrowing-down rate for the collation target persons is set to "$R_{nd}$".

[Configuration of Terminal 30]

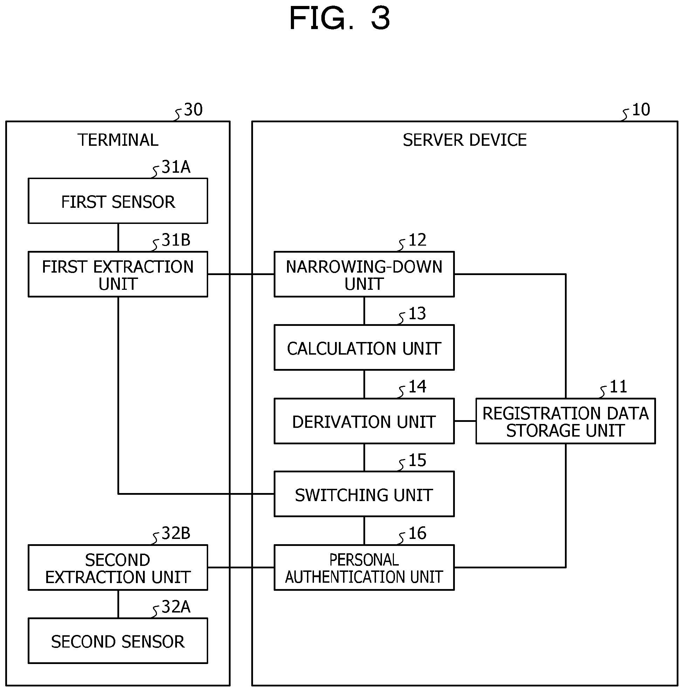

Subsequently, an example of the functional configuration of the terminal 30 according to the present embodiment will be described. FIG. 3 is a block diagram illustrating an example of the functional configurations of the server device and the terminal according to the first embodiment. In FIG. 3, blocks corresponding to the functions of the multi-biometric authentication service 1 described above are illustrated in the server device 10 and the terminal 30. As illustrated in FIG. 3, the terminal 30 includes a first sensor 31A, a first extraction unit 31B, a second sensor 32A, and a second extraction unit 32B. Note that FIG. 3 only illustrates an excerpt of the functional units related to the multi-biometric authentication service 1 described above, and a functional unit other than those illustrated, such as a functional unit mounted on an existing computer by default or as an option, including a display unit as an example, is not excluded from being included in the terminal 30.

The first sensor 31A is a functional unit that senses a biometric image of the first modality. As an embodiment, the first sensor 31A may be achieved by a camera equipped with an imaging element such as a charge coupled device (CCD) or a complementary metal oxide semiconductor (CMOS). Here, the "image" taken by the first sensor 31A has an aspect used for narrowing down based on the face information. From such an aspect, as an example of the camera enabled to image a face of a person who uses the terminal 30, a camera arranged in the same direction as the orientation of a screen of a display unit (not illustrated), a so-called in-camera, may be used as the first sensor 31A.

The first extraction unit 31B is a functional unit that extracts the biometric information of the first modality. For example, when the first modality is the face information, the face information may be the whole image in which the face is imaged or may be features of the face extracted from the image of the face. Hereinafter, a case where an embedded vector is used merely as an example of the face information will be explained. In this case, the first extraction unit 31B can use a model that has learned an embedding space through deep learning or the like, such as a convolutional neural network (CNN). For example, the first extraction unit 31B performs face detection on the output of the first sensor, such as an image taken in frame units, and inputs a partial image corresponding to the face area obtained by face detection to the CNN that has learned the embedding space. This allows an embedded vector to be obtained from the CNN. Thereafter, the first extraction unit 31B encrypts the above face information in accordance with the algorithm of a predetermined encryption scheme such as public key encryption as an example, as the input face information, and then transmits the encrypted input face information to the server device 10. Note that the embedded vector is merely an example of the face information, and other features such as scale-invariant feature transform (SIFT) as an example may be extracted.

The second sensor 32A is a functional unit that senses a biometric image of the second modality. As an embodiment, the second sensor 32A may be achieved as a sensor unit including an illumination that emits infrared light such as near infrared light having a wavelength suitable for imaging a vascular pattern of veins existing inside a palm and a camera capable of capturing the infrared light. For example, when the palm is placed at a predetermined imaging position, the illumination emits the infrared light to the palm. The camera activated in conjunction with the emission of this infrared light images infrared light reflected and returned from the inside of the palm. Through such imaging, the infrared light is absorbed by erythrocytes in the veins, and as a result, a palm vein image in which the vascular pattern of the palm veins appears is obtained as a biometric image.

The second extraction unit 32B is a functional unit that extracts the biometric information of the second modality. In one embodiment, the second extraction unit 32B takes out a blood vessel portion from the palm vein image acquired by the second sensor 32A to then thin the taken-out blood vessel portion and extracts features such as coordinates of a branched point in the blood vessel, a length between the branched points, a branch angle of the branched point, or the like as palm vein information. Thereafter, the second extraction unit 32B encrypts the palm vein information in accordance with the algorithm of a predetermined encryption scheme such as public key encryption as an example, as input palm vein information, and then, transmits the encrypted input palm vein information to the server device 10.

Note that the functional units such as the first extraction unit 31B and the second extraction unit 32B can be virtually achieved by a hardware processor such as a central processing unit (CPU) or a micro processing unit (MPU). For example, the processor reads not only an operating system (OS) but also a program such as a feature extraction program that achieves the functions such as the above-mentioned feature extraction, from a storage device (not illustrated) such as a read only memory (ROM) as an example. Thereafter, by executing the above-mentioned feature extraction program, the processor loads processes corresponding to the functional units described above into a memory such as a random access memory (RAM). As a result, the above functional units are virtually achieved as processes. While the CPU and the MPU are explained as an example of the processor here, the functional units described above may be achieved by any processor regardless of a versatile type or a dedicated type. Additionally, the functional units described above may also be achieved by a hard wired logic such as an application specific integrated circuit (ASIC) or a field programmable gate array (FPGA).

[Configuration of Server Device 10]

Next, an example of the functional configuration of the server device 10 according to the present embodiment will be described. As illustrated in FIG. 3, the server device 10 includes a registration data storage unit 11, a narrowing-down unit 12, a calculation unit 13, a derivation unit 14, a switching unit 15, and a personal authentication unit 16. Note that FIG. 3 only illustrates an excerpt of the functional units related to the multi-biometric authentication service 1 described above, and a functional unit other than those illustrated, such as a functional unit mounted on an existing computer by default or as an option, including an input unit or a display unit as an example, is not excluded from being included in the server device 10.

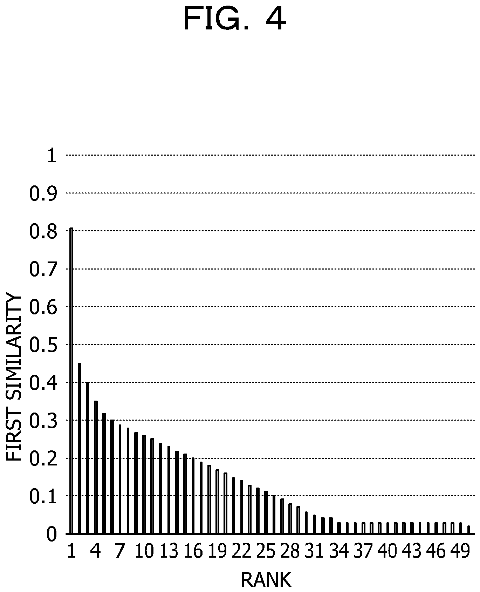

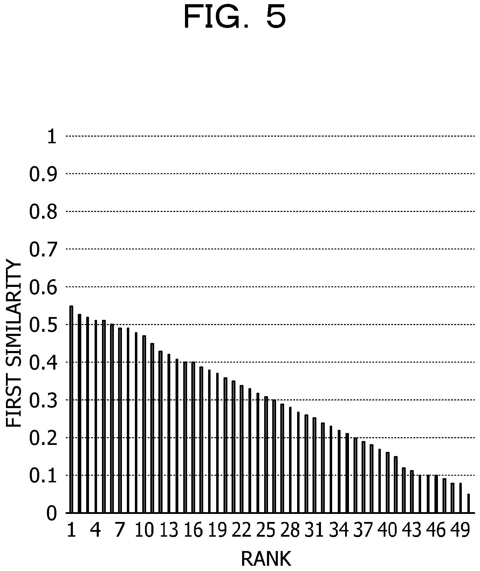

The registration data storage unit 11 is a functional unit that stores the registration data. For example, as the registration data, data in which the registered face information and registered palm vein information are associated for each of the N registrants can be adopted. Not only these registered face information and registered palm vein information, but also the kurtosis calculated from the distribution regarding the second similarity between the registered face information on the registrant and the registered face information on other registrants for each of the N registrants may be associated with the registration data. Note that the method for calculating the "kurtosis" will be described later with reference to FIGs. 4 and 5.

The narrowing-down unit 12 is a functional unit that narrows down the registrants included in the above registration data to the collation target persons to be collated by personal authentication using the second modality, by a first narrowing-down rate, based on the first similarity between input biometric information and registered biometric information of the first modality. As one embodiment, the narrowing-down unit 12 calculates the first similarity between the registered face information and the input face information for each registrant of the registration data stored in the registration data storage unit 11. For example, when an embedded vector is extracted as the face information, a Hamming distance between the registered face information and the input face information can be used as the first similarity. After that, the narrowing-down unit 12 narrows down the number N of registrants to a top predetermined number of registrants whose ranks of the similarity correspond to the first narrowing-down rate $R_{nd}$, for example, 1%, as candidates for the above-mentioned collation target persons.

The calculation unit 13 is a functional unit that calculates the distribution regarding the first similarity described above. As one embodiment, when the first similarity between the registered face information and the input face information is calculated at the time of narrowing down by the narrowing-down unit 12, the calculation unit 13 sorts the first similarity in descending order. By sorting the first similarity in descending order in this manner, the probability distribution of the first similarity is obtained. After that, the calculation unit 13 calculates a kurtosis K1 from the probability distribution of the first similarity in accordance with following formula (1). Here, "n" in following formula (1) denotes the number of pieces of data of the first similarity. In addition, "m" in following formula (1) denotes an average value of the first similarity $x_k$ (k = 1, 2, ..., n). Furthermore, "s" in following formula (1) denotes standard deviation. Note that the number n of pieces of data of the first similarity may be the number N of registrants or may be the number of collation target persons.

[Formula 1]

$$\text{Kurtosis} = \frac{n(n+1)}{(n-1)(n-2)(n-3)} \sum_{k=1}^{n} \frac{(x_k - m)^4}{s^4} - \frac{3(n-1)^2}{(n-2)(n-3)}$$

$$\cdots (1)$$

FIGs. 4 and 5 are diagrams illustrating examples of the distribution regarding the first similarity. Merely as an example, FIGs. 4 and 5 illustrate examples in which the number of pieces of data of the first similarity is "50". For example, when the probability distribution of the first similarity is distribution D15 illustrated in FIG. 4, the kurtosis K1 is calculated as "6.63" in accordance with above formula (1). In addition, when the probability distribution of the first similarity is distribution D16 illustrated in FIG. 5, the kurtosis K1 is calculated as "-1.20" in accordance with above formula (1). In this manner, it is indicated that, as the value of the kurtosis K1 of the probability distribution of the first similarity becomes higher, the fall from the first rank toward lower ranks from the second rank onward becomes steeper, while a lower value of the kurtosis K1 means a more gradual fall.

The derivation unit 14 is a functional unit that derives the distribution regarding the second similarity between the biometric information of the first modality having the first-ranked first similarity and the biometric information of the first modality having the second and lower-ranked first similarity, among the biometric information of the first modality included in the registration data. As one aspect, every time the first similarity between the registered face information and the input face information is calculated, the derivation unit 14 may calculate the second similarity between the registered face information having the first-ranked first similarity and the registered face information having the second and lower-ranked first similarity, among the registered face information. Then, the derivation unit 14 sorts the second similarity in descending order. By sorting the second similarity in descending order in this manner, the probability distribution of the second similarity may be obtained. Thereafter, the derivation unit 14 can calculate a kurtosis K2 of the probability distribution of the second similarity, as in the kurtosis K1 of the probability distribution of the first similarity described above. As another aspect, when the first similarity between the registered face information and the input face information is calculated, the derivation unit 14 also can acquire the kurtosis of the probability distribution of the second similarity associated with the registrant having the first-ranked first similarity from the registration data, as the kurtosis K2.

The switching unit 15 is a functional unit that switches the narrowing-down rate for narrowing down the registrants included in the registration data to the collation target persons to be collated by personal authentication using the second modality, based on the distribution regarding the first similarity and the distribution regarding the second similarity.

As one aspect, when the above-mentioned kurtosis K2 exceeds a predetermined threshold value th1 and an absolute difference value A between the kurtosis K1 and the kurtosis K2 is equal to or lower than a predetermined threshold value th2, the situation can be estimated to correspond to the case C1 illustrated in FIG. 2. In this case, the switching unit 15 switches the first narrowing-down rate $R_{nd}$ to a second narrowing-down rate $R_{nd} - \alpha$. For example, when $\alpha = 0.5\%$ is assumed, the number N of registrants are narrowed down to a top predetermined number of registrants whose ranks of the similarity correspond to the second narrowing-down rate "0.5% (= 1 - 0.5)", as the collation target persons.

As another aspect, the switching unit 15 switches between whether or not to prompt the reacquisition of the input face information, based on the distribution regarding the first similarity and the distribution regarding the second similarity. For example, when the above-mentioned kurtosis K2 exceeds the predetermined threshold value th1 and the absolute difference value A between the kurtosis K1 and the kurtosis K2 is not equal to or lower than the predetermined threshold value th2, the situation can be estimated to correspond to the case C3 illustrated in FIG. 2. In this case, the switching unit 15 instructs the first extraction unit 31B and the like of the terminal 30 to reacquire the input face information.

As a further aspect, when the above-mentioned kurtosis K2 does not exceed the predetermined threshold value th1, the situation can be estimated to correspond to the cases C2 and C4 illustrated in FIG. 2. In this case, the switching unit 15 does not reacquire the input face information while continuously maintaining the first narrowing-down rate.

The personal authentication unit 16 is a functional unit that executes personal authentication, based on the input biometric information and the registered biometric information of the second modality. As one embodiment, the personal authentication unit 16 calculates a third similarity between registered palm veins of the collation target persons and input palm veins acquired from the second extraction unit 32B. For example, as the third similarity, cross-correlation obtained by pattern matching between the registered palm veins and the input palm veins can be used. Then, when the registered palm veins whose third similarity with the input palm veins is equal to or higher than a predetermined threshold value th3 are found, the personal authentication unit 16 authenticates that the input palm veins are really of the registrant. On the other hand, when the registered palm veins whose third similarity with the input palm veins is equal to or higher than a predetermined threshold value th3 are not found, the personal authentication unit 16 authenticates that the input palm veins are not really of the registrant.

Note that the functional units such as the narrowing-down unit 12, the calculation unit 13, the derivation unit 14, the switching unit 15, and the personal authentication unit 16 can be virtually achieved by a hardware processor such as a CPU or an MPU. For example, the processor reads not only the OS but also a program such as the biometric authentication program that achieves the above-mentioned functions of the multi-biometric authentication service 1, from a storage device (not illustrated) such as an auxiliary storage device including a hard disk drive (HDD), an optical disc, or a solid state drive (SSD) as an example. Thereafter, by executing the above biometric authentication program, the processor loads processes corresponding to the above functional units into a memory such as a RAM. As a result, the above functional units are virtually achieved as processes. While the CPU and the MPU are explained as an example of the processor here, the functional units described above may be achieved by any processor regardless of a versatile type or a dedicated type. Additionally, the functional unit described above may be achieved by a hard wired logic such as an ASIC or an FPGA.

A storage unit such as the registration data storage unit 11 described above may be achieved as an auxiliary storage device such as an HDD, an optical disc, or an SSD, or may be achieved by assigning a part of the storage area included in the auxiliary storage device.

[Flow of Processing]

Next, a flow of processing of the server device 10 according to the present embodiment will be described. Hereinafter, (1) a registration process will be described, and then (2) a multi-biometric authentication process will be described, which are executed by the server device 10.

(1) Registration Process

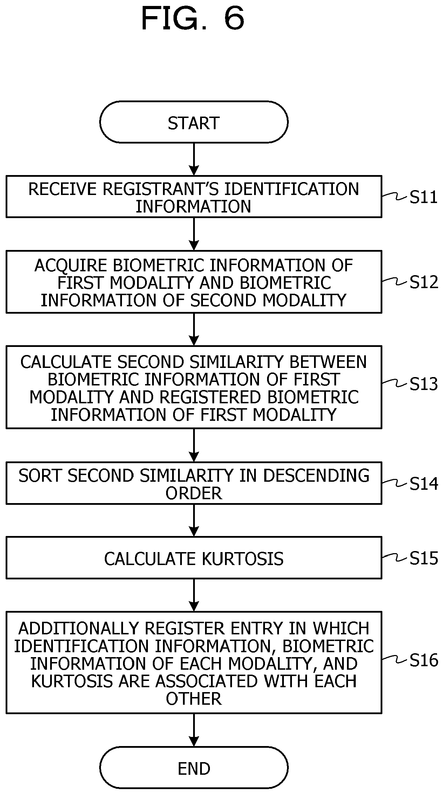

FIG. 6 is a flowchart illustrating a procedure of the registration process according to the first embodiment. Merely as an example, this registration process can be started when a user registration request is received from any device including the terminal 30.

As illustrated in FIG. 6, the server device 10 receives the registrant's identification information such as an ID as an example (step S11). Subsequently, the server device 10 acquires the biometric information of the first modality and the biometric information of the second modality (step S12).

Then, the server device 10 calculates the second similarity between the biometric information of the first modality acquired in step S12 and the registered biometric information of the first modality stored as the registration data in the registration data storage unit 11 (step S13).

After that, the server device 10 sorts the second similarity calculated in step S13 in descending order (step S14). By sorting the second similarity in descending order in this manner, the probability distribution of the second similarity is obtained. Subsequently, the server device 10 calculates the kurtosis from the probability distribution of the second similarity (step S15).

Thereafter, the server device 10 adds an entry in which the identification information received in step S11, the biometric information of the first modality and the biometric information of the second modality acquired in step S13, and the kurtosis of the probability distribution of the second similarity calculated in step S15 are associated with each other, to the registration data (step S16) and ends the process.

(2) Multi-biometric Authentication Process

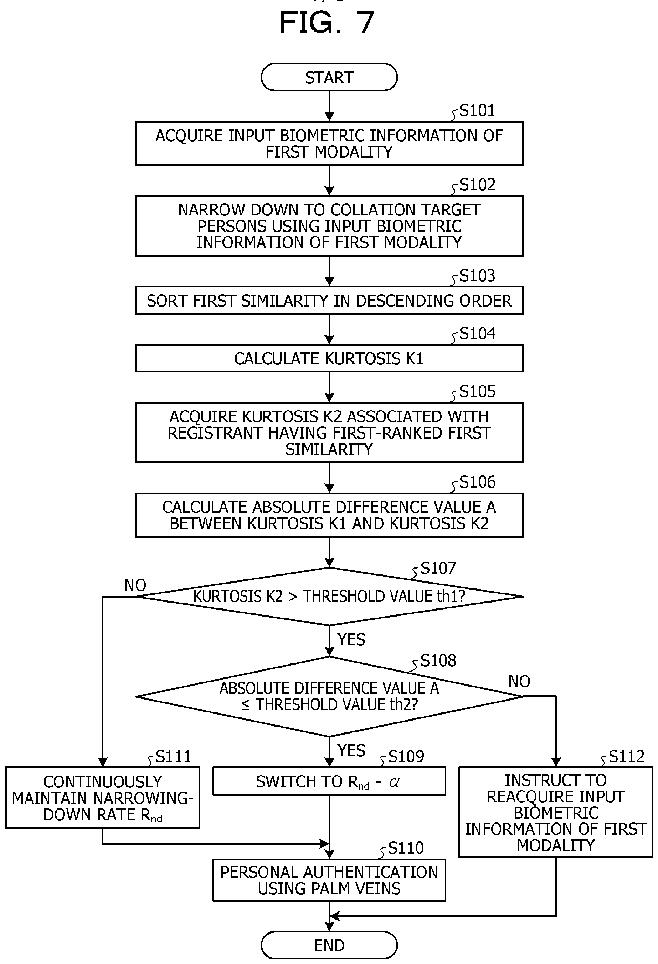

FIG. 7 is a flowchart illustrating a procedure of the multi-biometric authentication process according to the first embodiment. Merely as an example, this process can be started when the input biometric information of the first modality is acquired from the first extraction unit 31B of the terminal 30.

As illustrated in FIG. 7, when the input biometric information of the first modality is acquired (step S101), the narrowing-down unit 12 narrows down to the collation target persons to be collated by personal authentication using the second modality, by the first narrowing-down rate, based on the first similarity between the input biometric information and the registered biometric information of the first modality (step S102).

Subsequently, the calculation unit 13 sorts the above-mentioned first similarity in descending order (step S103). By sorting the first similarity in descending order in this manner, the probability distribution of the first similarity is obtained. After that, the calculation unit 13 calculates the kurtosis K1 from the probability distribution of the first similarity in accordance with formula (1) described above (step S104).

Then, the derivation unit 14 derives the kurtosis K2 by acquiring the kurtosis of the probability distribution of the second similarity associated with the registrant having the first-ranked first similarity mentioned above, from the registration data (step S105).

Subsequently, the switching unit 15 calculates the absolute difference value A between the kurtosis K1 calculated in step S104 and the kurtosis K2 derived in step S105 (step S106).

Here, when the above-mentioned kurtosis K2 exceeds the predetermined threshold value th1 and the absolute difference value A between the kurtosis K1 and the kurtosis K2 is equal to or lower than the predetermined threshold value th2 (Yes in step S107 and Yes in step S108), the situation can be estimated to correspond to the case C1 illustrated in FIG. 2. In this case, the switching unit 15 switches the first narrowing-down rate $R_{nd}$ to the second narrowing-down rate $R_{nd} - \alpha$ (step S109).

Then, the personal authentication unit 16 authenticates whether or not the input palm veins are really of the registrant, based on the third similarity between the registered palm veins of the collation target persons narrowed down by the second narrowing-down rate $R_{nd} - \alpha$ and the input palm veins acquired from the second extraction unit 32B (step S110) and ends the process.

On the other hand, when the above-mentioned kurtosis K2 does not exceed the predetermined threshold value th1 (No in step S107), the situation can be estimated to correspond to the cases C2 and C4 illustrated in FIG. 2. In this case, the switching unit 15 does not reacquire the input face information while continuously maintaining the first narrowing-down rate.

In other words, the personal authentication unit 16 authenticates whether or not the input palm veins are really of the registrant, based on the third similarity between the registered palm veins of the collation target persons narrowed down by the first narrowing-down rate $R_{nd}$ and the input palm veins acquired from the second extraction unit 32B (step S110) and ends the process.

Note that, when the above-mentioned kurtosis K2 exceeds the predetermined threshold value th1 and the absolute difference value A between the kurtosis K1 and the kurtosis K2 is not equal to or lower than the predetermined threshold value th2 (Yes in step S107 and No in step S108), the situation can be estimated to correspond to the case C3 illustrated in FIG. 2. In this case, the switching unit 15 instructs the first extraction unit 31B and the like of the terminal 30 to reacquire the input face information (step S112) and ends the process.

[One Aspect of Effects]

As described above, the multi-biometric authentication service 1 according to the present embodiment switches the narrowing-down rate for the collation target persons to be collated by personal authentication using the palm veins, based on the distribution of the similarity between the input face information and the registered face information, and the distribution of the similarity between the registered face information having the first-ranked similarity and the registered face information having the second and lower-ranked similarity. For example, when there is room to narrow down the number N of registrants to a small number of collation targets, by lowering the narrowing-down rate for narrowing down the number N of registrants to the collation target persons, the number of collation target persons narrowed down from the number N of registrants may be changed to a smaller number than before the change. Therefore, according to the multi-biometric authentication service 1 according to the present embodiment, speeding-up of the collation process may be achieved.

[Second Embodiment]

Incidentally, while the embodiment relating to the disclosed device has been described above, the present invention may be carried out in a variety of different modes apart from the embodiment described above. Thus, hereinafter, another embodiment included in the present invention will be described.

[Application Example of Switching Criteria]

In the above first embodiment, an example of using the kurtosis K1 of the distribution D1 regarding the first similarity and the kurtosis K2 of the distribution D2 regarding the second similarity to determine the switching of the narrowing-down rate and the reacquisition of the input face information has been described. However, the criterion for switching does not necessarily have to be the kurtosis.

For example, instead of step S107 illustrated in FIG. 7, whether or not the difference between the first-ranked and second-ranked second similarity in the distribution D2 regarding the second similarity exceeds a predetermined threshold value th4 also may be designated as a conditional branch. In this case, when the difference between the first-ranked and second-ranked second similarity exceeds the threshold value th4, the process only has to proceed to the branch of Yes in step S107, while the process only has to proceed to the branch of No in step S107 when the difference between the first-ranked and second-ranked second similarity does not exceed the threshold value th4.

In addition, instead of step S107 illustrated in FIG. 7, whether or not the area of the distribution D2 regarding the second similarity is equal to or smaller than a predetermined threshold value th5 also may be designated as a conditional branch. In this case, when the area of the distribution D2 is equal to or smaller than the threshold value th5, the process only has to proceed to the branch of Yes in step S107, while the process only has to proceed to the branch of No in step S107 when the area of the distribution D2 is not equal to or smaller than the threshold value th5. Note that the area of the distribution D2 does not necessarily have to be the entire area of the distribution D2 and may be narrowed down to an area of a predetermined section from the first rank, such as up to the tenth rank.

In addition, instead of step S108 illustrated in FIG. 7, whether or not the similarity in shapes between the distribution D1 regarding the first similarity and the distribution D2 regarding the second similarity exceeds a predetermined threshold value th6 also may be designated as a conditional branch. In this case, when the similarity in shapes exceeds the threshold value th6, the process only has to proceed to the branch of Yes in step S108, while the process only has to proceed to the branch of No in step S108 when the similarity in shapes does not exceed the threshold value th6.

In addition, instead of step S108 illustrated in FIG. 7, whether or not the difference between the first-ranked and second-ranked first similarity in the distribution D1 regarding the first similarity exceeds a predetermined threshold value th7 also may be designated as a conditional branch. In this case, when the difference between the first-ranked and second-ranked first similarity exceeds the threshold value th7, the process only has to proceed to the branch of Yes in step S108, while the process only has to proceed to the branch of No in step S108 when the difference between the first-ranked and second-ranked first similarity does not exceed the threshold value th7.

In addition, instead of step S108 illustrated in FIG. 7, whether or not the area of the distribution D1 regarding the first similarity is equal to or smaller than a predetermined threshold value th8 also may be designated as a conditional branch. In this case, when the area of the distribution D1 is equal to or smaller than the threshold value th8, the process only has to proceed to the branch of Yes in step S108, while the process only has to proceed to the branch of No in step S108 when the area of the distribution D1 is not equal to or smaller than the threshold value th8. Note that the area of the distribution D1 does not necessarily have to be the entire area of the distribution D1 and may be narrowed down to an area of a predetermined section from the first rank, such as up to the tenth rank.

Note that, instead of step S108 illustrated in FIG. 7, whether or not the kurtosis K1 of the distribution D1 regarding the first similarity exceeds a predetermined threshold value th9 also may be designated as a conditional branch. In this case, when the kurtosis K1 exceeds the threshold value th9, the process only has to proceed to the branch of Yes in step S108, while the process only has to proceed to the branch of No in step S108 when the kurtosis K1 does not exceed the threshold value th9.

[Application to Standalone]

For example, in the above first embodiment, an example has been described in which the functions of the multi-biometric authentication service 1 including the server device 10 and the terminal 30 work in a client server system. However, the multi-biometric authentication service 1 described above may work standalone.

In addition, in the above first embodiment, an example in which the first modality is the face information, whereas the second modality is the palm veins has been described. However, each modality is not limited to a specific authentication site. For example, the face information of the first modality also may be swapped with the palm veins of the second modality, or another authentication site such as fingerprints or irises also may be applied to the first modality, or another authentication site such as fingerprints or irises also may be applied to the second modality.

[Biometric Authentication Program]

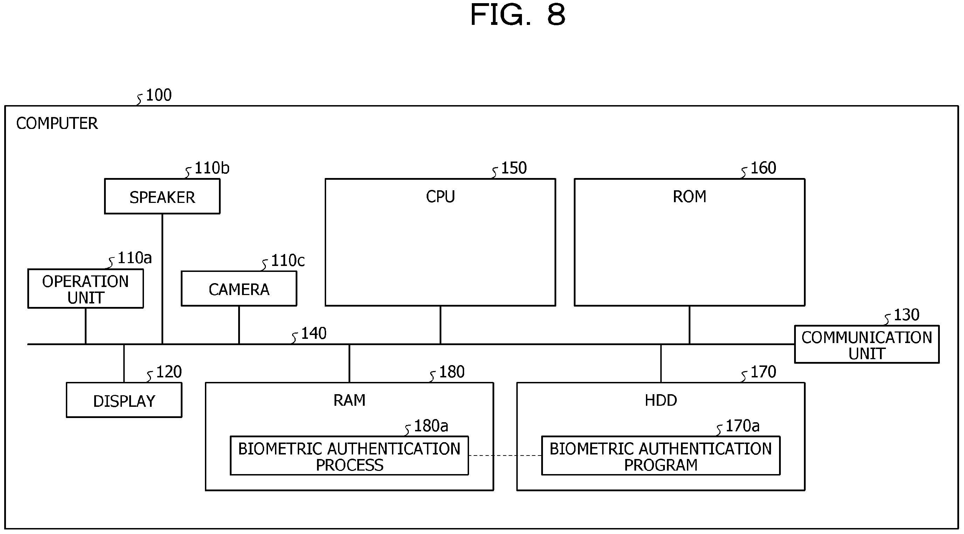

In addition, various sorts of processing described in the above embodiments may be achieved by executing a program prepared in advance on a computer such as a personal computer or a workstation. Thus, hereinafter, an example of a computer that executes the biometric authentication program having functions similar to the functions of the above first and second embodiments will be described with reference to FIG. 8.

FIG. 8 is a diagram illustrating a hardware configuration example of a computer. As illustrated in FIG. 8, a computer 100 includes an operation unit 110a, a speaker 110b, a camera 110c, a display 120, and a communication unit 130. Furthermore, this computer 100 includes a CPU 150, a ROM 160, an HDD 170, and a RAM 180. These respective units 110 to 180 are connected via a bus 140.

As illustrated in FIG. 8, the HDD 170 stores a biometric authentication program 170a that exhibits functions similar to the functions of the narrowing-down unit 12, the calculation unit 13, the derivation unit 14, the switching unit 15, and the personal authentication unit 16 illustrated in the above first embodiment. This biometric authentication program 170a may be integrated or separated as in the respective components illustrated in FIG. 3, namely, the narrowing-down unit 12, the calculation unit 13, the derivation unit 14, the switching unit 15, and the personal authentication unit 16. In other words, all pieces of data indicated in the above first embodiment do not necessarily have to be stored in the HDD 170, and it is sufficient that data for use in processing is stored in the HDD 170.

Under such an environment, the CPU 150 reads the biometric authentication program 170a from the HDD 170 and then loads the read biometric authentication program 170a into the RAM 180. As a result, the biometric authentication program 170a functions as a biometric authentication process 180a as illustrated in FIG. 8. This biometric authentication process 180a loads various sorts of data read from the HDD 170 into an area assigned to the biometric authentication process 180a in the storage area included in the RAM 180 and executes various sorts of processing, using these various sorts of loaded data. For example, examples of the processing to be executed by the biometric authentication process 180a include the processing illustrated in FIGs. 6 and 7 and the like. Note that all the processing units indicated in the above first embodiment do not necessarily have to work in the CPU 150, and it is sufficient that a processing unit corresponding to processing to be executed is virtually achieved.

In addition, the biometric authentication program 170a described above does not necessarily have to be stored in the HDD 170 or the ROM 160 from the beginning. For example, each program is stored in a "portable physical medium" such as a flexible disk, which is a so-called FD, a compact disc read only memory (CD-ROM), a digital versatile disc (DVD), a magneto-optical disk, or an integrated circuit (IC) card to be inserted into the computer 100. Then, the computer 100 may acquire each program from these portable physical media to execute each acquired program. In addition, each program may be stored in another computer, server device, or the like connected to the computer 100 via a public line, the Internet, a local area network (LAN), a wide area network (WAN), or the like, and the computer 100 may acquire each program from these other computer and server device to execute each acquired program.

CITATION LIST

PATENT DOCUMENT

Patent Document 1: Japanese Laid-open Patent Publication No. 2013-122679
Patent Document 2: Japanese Laid-open Patent Publication No. 2008-299589

REFERENCE SIGNS LIST

10 Server device
11 Registration data storage unit
12 Narrowing-down unit
13 Calculation unit
14 Derivation unit
15 Switching unit
16 Personal authentication unit
30 Terminal
31A First sensor
31B First extraction unit
32A Second sensor
32B Second extraction unit

**Claims**

1. A biometric authentication device comprising:

   a calculation unit that calculates distribution regarding a first similarity between biometric information of a first modality extracted from output of a sensor and the biometric information of the first modality included in registration data that is predetermined;
   a derivation unit that derives the distribution regarding a second similarity between the biometric information of the first modality of which the first similarity is ranked first and the biometric information of the first modality of which the first similarity is ranked second and lower, among the biometric information of the first modality included in the registration data; and
   a switching unit that switches a narrowing-down rate configured to narrow down registrants included in the registration data to collation target persons to be collated by personal authentication that uses a second modality different from the first modality, based on the distribution regarding the first similarity and the distribution regarding the second similarity.

2. The biometric authentication device according to claim 1, wherein the switching unit switches the narrowing-down rate, based on a kurtosis of the distribution regarding the first similarity and the kurtosis of the distribution regarding the second similarity.

3. The biometric authentication device according to claim 2, wherein the switching unit decreases the narrowing-down rate when the kurtosis of the distribution regarding the second similarity exceeds a predetermined threshold value, and an absolute difference value between the kurtosis of the distribution regarding the first similarity and the kurtosis of the distribution regarding the second similarity falls within the predetermined threshold value.

4. The biometric authentication device according to claim 2, wherein the switching unit executes reacquisition of the biometric information of the first modality extracted from the output of the sensor when the kurtosis of the distribution regarding the second similarity exceeds the predetermined threshold value, and the absolute difference value between the kurtosis of the distribution regarding the first similarity and the kurtosis of the distribution regarding the second similarity does not fall within the predetermined threshold value.

5. The biometric authentication device according to claim 2, wherein the distribution regarding the first similarity or the distribution regarding the second similarity is probability distribution obtained by sorting the first similarity or the second similarity in descending order.

6. The biometric authentication device according to claim 1, wherein the first modality is face information.

7. The biometric authentication device according to claim 1, wherein the second modality is palm veins.

8. A biometric authentication method implemented by a computer, the biometric authentication method comprising:

calculating distribution regarding a first similarity between biometric information of a first modality extracted from output of a sensor and the biometric information of the first modality included in registration data that is predetermined;
deriving the distribution regarding a second similarity between the biometric information of the first modality of which the first similarity is ranked first and the biometric information of the first modality of which the first similarity is ranked second and lower, among the biometric information of the first modality included in the registration data; and
switching a narrowing-down rate configured to narrow down registrants included in the registration data to collation target persons to be collated by personal authentication that uses a second modality different from the first modality, based on the distribution regarding the first similarity and the distribution regarding the second similarity.

9. The biometric authentication method according to claim 8, wherein the switching of the narrowing-down rate switches the narrowing-down rate, based on a kurtosis of the distribution regarding the first similarity and the kurtosis of the distribution regarding the second similarity.

10. The biometric authentication method according to claim 9, wherein the switching of the narrowing-down rate decreases the narrowing-down rate when the kurtosis of the distribution regarding the second similarity exceeds a predetermined threshold value, and an absolute difference value between the kurtosis of the distribution regarding the first similarity and the kurtosis of the distribution regarding the second similarity falls within the predetermined threshold value.

11. The biometric authentication method according to claim 9, wherein the switching of the narrowing-down rate executes reacquisition of the biometric information of the first modality extracted from the output of the sensor when the kurtosis of the distribution regarding the second similarity exceeds the predetermined threshold value, and the absolute difference value between the kurtosis of the distribution regarding the first similarity and the kurtosis of the distribution regarding the second similarity does not fall within the predetermined threshold value.

12. The biometric authentication method according to claim 9, wherein the distribution regarding the first similarity or the distribution regarding the second similarity is probability distribution obtained by sorting the first similarity or the second similarity in descending order.

**13.** The biometric authentication method according to claim 8, wherein the first modality is face information.

**14.** The biometric authentication method according to claim 8, wherein the second modality is palm veins.

**15.** A biometric authentication program comprising instructions which, when executed by a computer, cause the computer to perform processing, the processing comprising:

calculating distribution regarding a first similarity between biometric information of a first modality extracted from output of a sensor and the biometric information of the first modality included in registration data that is predetermined;
deriving the distribution regarding a second similarity between the biometric information of the first modality of which the first similarity is ranked first and the biometric information of the first modality of which the first similarity is ranked second and lower, among the biometric information of the first modality included in the registration data; and
switching a narrowing-down rate configured to narrow down registrants included in the registration data to collation target persons to be collated by personal authentication that uses a second modality different from the first modality, based on the distribution regarding the first similarity and the distribution regarding the second similarity.

**16.** The biometric authentication program according to claim 15, wherein the switching of the narrowing-down rate switches the narrowing-down rate, based on a kurtosis of the distribution regarding the first similarity and the kurtosis of the distribution regarding the second similarity.

**17.** The biometric authentication program according to claim 16, wherein the switching of the narrowing-down rate decreases the narrowing-down rate when the kurtosis of the distribution regarding the second similarity exceeds a predetermined threshold value, and an absolute difference value between the kurtosis of the distribution regarding the first similarity and the kurtosis of the distribution regarding the second similarity falls within the predetermined threshold value.

**18.** The biometric authentication program according to claim 16, wherein the switching of the narrowing-down rate executes reacquisition of the biometric information of the first modality extracted from the output of the sensor when the kurtosis of the distribution regarding the second similarity exceeds the predetermined threshold value, and the absolute difference value between the kurtosis of the distribution regarding the first similarity and the kurtosis of the distribution regarding the second similarity does not fall within the predetermined threshold value.

**19.** The biometric authentication program according to claim 16, wherein the distribution regarding the first similarity or the distribution regarding the second similarity is probability distribution obtained by sorting the first similarity or the second similarity in descending order.

**20.** The biometric authentication program according to claim 15, wherein the first modality is face information.

# FIG. 1

1

30

30

(1) ACQUIRE FACE INFORMATION
WHILE TERMINAL IS BEING
OPERATED

(3) INPUT PALM VEINS

(5) PAYMENT IS
COMPLETED

(2) NARROW DOWN TO
COLLATION TARGET
PERSONS WITH FACE
INFORMATION

(4) SPECIFY IDENTITY
WITH PALM VEINS AND
FACE INFORMATION

SERVER DEVICE

10

# FIG. 2

# FIG. 3

TERMINAL 30

FIRST SENSOR 31A

FIRST EXTRACTION UNIT 31B

SECOND EXTRACTION UNIT 32B

SECOND SENSOR 32A

SERVER DEVICE 10

NARROWING-DOWN UNIT 12

CALCULATION UNIT 13

DERIVATION UNIT 14

REGISTRATION DATA STORAGE UNIT 11

SWITCHING UNIT 15

PERSONAL AUTHENTICATION UNIT 16

# FIG. 4

# FIG. 5

# FIG. 6

START

RECEIVE REGISTRANT'S IDENTIFICATION INFORMATION ~S11

ACQUIRE BIOMETRIC INFORMATION OF FIRST MODALITY AND BIOMETRIC INFORMATION OF SECOND MODALITY ~S12

CALCULATE SECOND SIMILARITY BETWEEN BIOMETRIC INFORMATION OF FIRST MODALITY AND REGISTERED BIOMETRIC INFORMATION OF FIRST MODALITY ~S13

SORT SECOND SIMILARITY IN DESCENDING ORDER ~S14

CALCULATE KURTOSIS ~S15

ADDITIONALLY REGISTER ENTRY IN WHICH IDENTIFICATION INFORMATION, BIOMETRIC INFORMATION OF EACH MODALITY, AND KURTOSIS ARE ASSOCIATED WITH EACH OTHER ~S16

END

# FIG. 7

START

S101
ACQUIRE INPUT BIOMETRIC INFORMATION OF FIRST MODALITY

S102
NARROW DOWN TO COLLATION TARGET PERSONS USING INPUT BIOMETRIC INFORMATION OF FIRST MODALITY

S103
SORT FIRST SIMILARITY IN DESCENDING ORDER

S104
CALCULATE KURTOSIS K1

S105
ACQUIRE KURTOSIS K2 ASSOCIATED WITH REGISTRANT HAVING FIRST-RANKED FIRST SIMILARITY

S106
CALCULATE ABSOLUTE DIFFERENCE VALUE A BETWEEN KURTOSIS K1 AND KURTOSIS K2

S107
KURTOSIS K2 > THRESHOLD VALUE th1?

NO

YES

S108
ABSOLUTE DIFFERENCE VALUE A ≤ THRESHOLD VALUE th2?

NO

YES

S111
CONTINUOUSLY MAINTAIN NARROWING-DOWN RATE $R_{nd}$

S109
SWITCH TO $R_{nd} - \alpha$

S112
INSTRUCT TO REACQUIRE INPUT BIOMETRIC INFORMATION OF FIRST MODALITY

S110
PERSONAL AUTHENTICATION USING PALM VEINS

END

# FIG. 8

## INTERNATIONAL SEARCH REPORT

| International application No. |
| --- |
| PCT/JP2020/018749 |

**A.    CLASSIFICATION OF SUBJECT MATTER**
Int. Cl. G06F21/32(2013.01)i
FI: G06F21/32

According to International Patent Classification (IPC) or to both national classification and IPC

**B.    FIELDS SEARCHED**

Minimum documentation searched (classification system followed by classification symbols)
Int. Cl. G06F21/32

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2005-275508 A (SANYO ELECTRIC CO., LTD.) 06 October 2005, paragraphs [0004]-[0008], [0016]-[0025], [0033]-[0040], fig. 3, 4 | 1-20 |
| A | WO 2013/145249 A1 (FUJITSU LTD.) 03 October 2013, paragraphs [0004], [0005], [0011]-[0035], fig. 1-8 | 1-20 |

☐  Further documents are listed in the continuation of Box C.          ☒  See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 29.07.2020 | 11.08.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/018749

| Patent Documents referred to in the Report | Publication Date | Patent Family | Publication Date |
|---|---|---|---|
| JP 2005-275508 A | 06.10.2005 | (Family: none) | |
| WO 2013/145249 A1 | 03.10.2013 | US 2014/0363055 A1 paragraphs [0008], [0022]-[0048], fig. 1-8 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013122679 A

- JP 2008299589 A